# EUROPÄISCHE PATENTANMELDUNG

(11) **EP 3 222 459 A1**
(43) Veröffentlichungstag der Anmeldung: **27.09.2017**
(21) Anmeldenummer: 17162004.0
(22) Anmeldetag: 21.03.2017
(51) Int. Cl.: B60L 11/18

(54) **LADESYSTEM FÜR ELEKTRISCHE VERBRAUCHER, LADEINFRASTRUKTUREINRICHTUNG MIT EINEM LADESYSTEM UND VERFAHREN ZUM BETREIBEN EINER LADEINFRASTRUKTUREINRICHTUNG**

(30) Priorität: 24.03.2016 DE 102016105614
(71) Anmelder: EnBW Energie Baden-Württemberg AG, 76131 Karlsruhe (DE)
(72) Erfinder: Walch, Lars, 76307 Karlsbad (DE); Ehrenfeld, Lars, 74199 Untergruppenbach (DE)
(74) Vertreter: Kaufmann, Ursula Josefine

(57) **Zusammenfassung**

Die Erfindung betrifft ein Ladesystem (100) für elektrische Verbraucher (10, 20), umfassend wenigstens zwei Ladeanschlüsse (102, 106, 108) und eine Leistungseinrichtung (110) mit einer Transformatoreinheit (130). Die Ladeanschlüsse (102, 106, 108) sind in wenigstens eine erste und wenigstens eine zweite elektrische Ladeleistungsgruppe (160, 170) eingeteilt, die von einer gemeinsamen Transformatoreinheit (130) des Ladesystems (100) versorgt sind. Die elektrische Ladeleistung der wenigstens ersten Ladeleistungsgruppe (160) ist um wenigstens einen Faktor zwei höher als die elektrische Ladeleistung der wenigstens zweiten Ladeleistungsgruppe (170).

## Beschreibung

### Stand der Technik

Die Erfindung betrifft ein Ladesystem für elektrische Verbraucher, eine Ladeinfrastruktureinrichtung mit einem Ladesystem und ein Verfahren zum Betreiben einer Ladeinfrastruktureinrichtung nach den Oberbegriffen der unabhängigen Ansprüche.

Es ist bekannt, elektrisch betriebene Fahrzeuge an Ladesäulen zu laden. Beispielsweise können Elektrofahrzeuge je nach verfügbarer Traktionsbatterie an AC- oder DC-Ladestationen innerhalb von relativ kurzer Zeit aufgeladen werden.

Das Bereitstellen der notwendigen Ladeinfrastruktur ist aufwändig und teuer.

Aus der DE 10 2011 079 870 B4 ist ein mobiles Ladesystem mit einer Mehrzahl von Ladesäulen bekannt, an welchen Elektrofahrzeuge aufgeladen werden können. Das Ladsystem kann beispielsweise auf einem Parkplatz installiert sein und dort zu Fahrzeugen mit Ladebedarf bewegt werden.

### Offenbarung der Erfindung

Die Aufgabe der Erfindung ist es, ein Ladesystem für elektrische Verbraucher zu schaffen, das sich leicht in eine vorhandene städtische Infrastruktur integrieren lässt.

Ferner soll eine entsprechende Ladeinfrastruktureinrichtung mit einem Ladesystem für elektrische Verbraucher geschaffen werden.

Weiterhin soll ein Verfahren zum Betreiben einer derartigen Ladeinfrastruktureinrichtung mit einem Ladesystem für elektrische Verbraucher angegeben werden.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht aus von einem Ladesystem für elektrische Verbraucher, umfassend wenigstens zwei Ladeanschlüsse und eine Leistungseinrichtung mit einer Transformatoreinheit.

Es wird vorgeschlagen, dass die Ladeanschlüsse in wenigstens eine erste und wenigstens eine zweite elektrische Ladeleistungsgruppe eingeteilt sind, die von einer gemeinsamen Transformatoreinheit des Ladesystems versorgt sind, wobei die elektrische Ladeleistung der wenigstens ersten Ladeleistungsgruppe um wenigstens einen Faktor zwei höher ist als die elektrische Ladeleistung der wenigstens zweiten Ladeleistungsgruppe.

Vorteilhaft kann die Leistungseinrichtung auf die Anforderungen der Ladeleistungsgruppe mit der höheren oder höchsten Ladeleistung hin ausgelegt sein. Günstigerweise können die Ladeanschlüsse DC-Ladeanschlüsse sein. Für Ladeleistungsgruppen mit geringerer Ladeleistung können daher kostensparend dieselbe Leistungselektronik und dieselbe Transformatoreinheit vorgesehen sein wie für die Ladeleistungsgruppe mit der höchsten Ladeleistung. Vorteilhaft können für Ladeleistungsgruppen mit geringerer Ladeleistung kostensparend dieselbe Leistungselektronik und dieselbe Transformatoreinheit vorgesehen sein wie für die Ladeleistungsgruppe mit der höchsten Ladeleistung.

Dabei beschreibt der Begriff Ladeanschlüsse nicht zwangsläufig eine bauliche Einheit in Form einer Ladesäule, sondern einen Ladeleistungsanschluss, an dem Ladeleistung zur Verfügung gestellt wird. Mehrere Ladeanschlüsse können in einer baulichen Einheit zusammengefasst sein, beispielsweise einer Ladesäule mit mehreren Ladeanschlüssen, so dass mehrere Verbraucher an dieser baulichen Einheit geladen werden können, oder es kann eine bauliche Einheit genau einen Ladeanschluss aufweisen.

Vorteilhaft können für Ladeleistungsgruppen mit geringerer Ladeleistung kostensparend dieselbe Leistungselektronik und dieselbe Transformatoreinheit vorgesehen sein wie für die Ladeleistungsgruppe mit der höchsten Ladeleistung. Mit besonderem Vorteil kann die Leistungseinrichtung von einem ortsüblichen lokalen Versorgungsnetz, etwa innerhalb einer Kommune, versorgt sein. Der Aufbau einer gesonderten Infrastruktur für das Laden der elektrischen Verbraucher kann vermieden werden. Beispielsweise können elektrisch betriebene Busse Verbraucher der ersten Ladeleistungsgruppe mit hohem Ladeleistungsbedarf und elektrisch betriebene Personenwagen Verbraucher der zweiten Ladeleistungsgruppe mit niedrigerem Ladeleistungsbedarf sein.

Nach einer günstigen Ausgestaltung kann die Zahl der Ladeanschlüsse der wenigstens zweiten Ladeleistungsgruppe mit geringerer elektrischer Ladeleistung um wenigstens ein geradzahliges Vielfaches größer sein als die Zahl der Ladeanschlüsse der wenigstens ersten Ladeleistungsgruppe, wobei das geradzahliges Vielfache mindestens gleich dem auf eine ganze Zahl gerundeten Faktor ist. Sind Busse und Personenwagen Verbraucher der ersten bzw. zweiten Ladeleistungsgruppe, kann vorteilhaft der Unterschied der Ladeleistung zwischen beispielsweise Bussen und Personenkraftwagen ausgenutzt werden. Typischerweise beträgt die Ladeleistung eines Elektrobusses 300 kW bis 400 kW, während bei einer DC-Schnellladung die Ladeleistung für Personenwagen heute bei 150 kW liegen kann. Dann können zweckmäßigerweise ein Ladeanschluss mit z.B. 300 kW in der ersten Ladeleistungsgruppe und zwei Ladeanschlüsse mit je 150 kW in der zweiten Ladeleistungsgruppen vorgesehen sein.

Optional kann auch vorgesehen sein, zusätzlich oder alternativ weitere Ladeleistungsgruppen mit geringerer Ladeleistung als die der ersten Ladeleistungsgruppe und einer entsprechenden Anzahl von Ladeanschlüssen für weitere Verbraucher, etwa Elektroräder oder sonstige elektrisch betriebene Transport- und/oder Fortbewegungsmittel vorzusehen. Hier kann die Zahl der Ladeanschlüsse in zweiten und weiteren Ladeleistungsgruppen bedarfsgerecht sinnvoll angepasst werden.

Nach einer günstigen Ausgestaltung kann das Ladesystem für elektrische Verbraucher, umfassend wenigstens zwei Ladeanschlüsse und eine Leistungseinrichtung mit einer Transformatoreinheit, wobei die Ladeanschlüsse in wenigstens eine erste und wenigstens eine zweite elektrische Ladeleistungsgruppe eingeteilt sind, die von einer gemeinsamen Transformatoreinheit des Ladesystems versorgt sind, ausgebildet sein, wobei die elektrische Ladeleistung der wenigstens ersten Ladeleistungsgruppe um wenigstens einen Faktor zwei höher ist als die elektrische Ladeleistung der wenigstens zweiten Ladeleistungsgruppe, und wobei die Zahl der Ladeanschlüsse der wenigstens zweiten Ladeleistungsgruppe mit geringerer elektrischer Ladeleistung um wenigstens ein geradzahliges Vielfaches größer ist als die Zahl der Ladeanschlüsse der wenigstens ersten Ladeleistungsgruppe, wobei das geradzahlige Vielfache mindestens gleich dem auf eine ganze Zahl gerundeten Faktor ist.

Nach einer günstigen Ausgestaltung kann den wenigstens zwei Ladeleistungsgruppen ein gemeinsames Energiemanagement mit einer Steuer- und/oder Regelungseinheit der Leistungseinrichtung zugeordnet sein. Insbesondere kann die Steuer- und/oder Regelungseinheit zu einer Priorisierung des Ladens von Verbrauchern der ersten Ladeleistungsgruppe gegenüber Verbrauchern anderer Ladeleistungsgruppen vorgesehen sein. Dies ermöglicht es, das Ladesystem in einer Ladeinfrastruktureinrichtung auf einfache Weise in eine kommunale Versorgungsinfrastruktur zu integrieren. So kann das Ladesystem in der Ladeinfrastruktureinrichtung an einer Bushaltestelle vorgesehen sein, so dass ein haltender Linienbus während der Aufnahme oder dem Aussteigen von Fahrgästen kurzzeitig geladen werden kann, ohne dass die Versorgungsinfrastruktur überlastet wird. Beispielsweise kann ein Laden von Verbrauchern der zweiten und etwaigen weiteren Ladeleistungsgruppen während des Ladens des Busses bedarfsweise kurzzeitig unterbrochen oder mit verminderter Leistung durchgeführt werden. Zweckmäßigerweise kann der Bus an der Bushaltestelle automatisch mit dem Ladeanschluss zum Laden der Batterie des Busses in Kontakt kommen.

Nach einer günstigen Ausgestaltung können wenigstens die Ladeanschlüsse der wenigstens zweiten und etwaigen weiteren Ladeleistungsgruppen DC-Ladeanschlüsse, insbesondere DC-Schnellladeanschlüsse, sein. Dies erlaubt in komfortabler Weise ein besonders schnelles und effizientes Laden von Verbrauchern. Günstigerweise kann ein Verbraucher der ersten Ladeleistungsgruppe in kurzer Zeit ausreichend aufgeladen werden, um eine gewünschte Strecke bis zu einem weiteren Ladesystem und/oder Ladeinfrastruktureinrichtung, etwa einer weiteren Bushaltestelle, zurücklegen zu können.

Nach einer günstigen Ausgestaltung kann wenigstens eine Energiespeichereinheit vorgesehen sein, welche zum Laden und/oder Zwischenspeichern von Ladeenergie für die wenigstens ersten und/oder wenigstens zweiten Ladeleistungsgruppen vorgesehen ist. Dies ist besonders günstig, wenn das Ladesystem an eine vorhandene Versorgungseinrichtung, etwa ein kommunales Versorgungsnetz von Haushalten, angeschlossen ist. Unerwünschte Lastspitzen können vermieden werden, so dass das Ladesystem die Verbraucher in Haushalten der Umgebung praktisch nicht beeinflusst. Günstigerweise kann die Energiespeichereinheit bei Stromüberschuss im Versorgungsnetz geladen werden und so kostengünstig zur Netzstabilität beitragen.

Nach einer günstigen Ausgestaltung kann die wenigstens erste Ladeleistungsgruppe zur Versorgung von Verbrauchern mit einer Ladeleistung von mindestens 300 kW, insbesondere mindestens 400 kW, vorgesehen sein, vorzugsweise zur Versorgung von Elektrobussen. Bei üblichen Aufenthalten von insbesondere Linienbussen an Bushaltestellen von wenigen Minuten kann in kurzer Zeit eine ausreichende Aufladung der Busbatterie erfolgen, die für eine Weiterfahrt bis zu einer weiteren Haltestelle mit Ladesystem ausreichend ist.

Nach einer günstigen Ausgestaltung kann die wenigstens zweite Ladeleistungsgruppe zur Versorgung von Verbrauchern mit einer Ladeleistung von höchstens 200 kW vorgesehen sein, vorzugsweise zur Versorgung von Elektrofahrzeugen. So können Personenwagen in der Nähe von Bushaltestellen bequem aufgeladen werden. Bei Schnellladeanschlüssen kann z.B. auch die Haltestellenfläche zum kurzzeitigen Abstellen und Laden von Fahrzeugen genutzt werden.

Nach einer günstigen Ausgestaltung kann der Ladeanschluss für die wenigstens erste Ladeleistungsgruppe eine Oberleitungsanordnung zur Stromabnahme durch einen Stromabnehmer eines Verbrauchers aufweisen. Dies ermöglicht auf einfache Weise das automatische Herstellen eines elektrischen Kontakts zwischen Ladeanschluss und Verbraucher. Beispielsweise kann der Verbraucher, insbesondere ein Linienbus, mit einem Oberleitungsstromabnehmer wie einem Pantographen, ausgestattet sein. Dies ist eine bewährte Technik im Linienverkehr von Straßenbahnen und Oberleitungsbussen. Selbstverständlich können Sicherheitsvorrichtungen gegen Missbrauch und Vandalismus an den Haltestellen mit einem Ladesystem, insbesondere in einer Ladeinfrastruktureinrichtung, vorgesehen sein.

Nach einer günstigen Ausgestaltung kann eine Kommunikationseinrichtung vorgesehen sein, mit der eine Kommunikation mit einer zentralen Steuerungseinrichtung durchführbar ist. Dies ermöglicht eine zuverlässige Abrechnung von Ladevorgängen. Eingesetzt werden können alle üblichen Kommunikationswege und Kommunikationsprotokolle. Vorteilhaft ist beispielsweise eine drahtlose Kommunikationsverbindung. Die Kommunikationseinrichtung kann eingesetzt werden, um Informationen an die Steuer- und/oder Regelungseinheit zu übermitteln und deren Verhalten zu beeinflussen. So kann ein Entladen und/oder ein Laden der Energiespeichereinheit abhängig von Wetterdaten und Wetterprognosen erfolgen. Ebenso kann die Tageszeit berücksichtigt werden, wenn das Ladesystem von einem kommunalen Versorgungsnetz versorgt ist, um eine Rückwirkung des Ladesystems auf das Versorgungsnetz möglichst gering zu halten oder zu unterbinden.

Zusätzlich bietet die Kommunikation mit der zentralen Steuerungseinrichtung, beispielsweise bei einem Energieversorger, die Möglichkeit, zur Versorgung des Ladesystems ein so genanntes virtuelles Kraftwerk zu bilden und daraus Ladeenergie verfügbar zu machen, indem beispielsweise vorübergehend dezentrale Stromerzeuger zusammengeschaltet werden. Dies kann entweder zum Laden der Energiespeichereinheit erfolgen oder auch unmittelbar zum Laden von Verbrauchern am Ladesystem. Vorteilhaft können so Lastspitzen im Versorgungsnetz beim Laden der Verbraucher vermieden werden.

Nach einer günstigen Ausgestaltung kann eine Kopplungseinrichtung zur Ankopplung an ein ortsübliches lokales elektrisches Versorgungsnetz vorgesehen sein. Ein separates Versorgungsnetz für das Ladesystem, insbesondere in einer Ladeinfrastruktureinrichtung integriert, kann entfallen. Das Ladesystem kann ein vorhandenes Versorgungsnetz nutzen und so insbesondere in Ballungsräumen Lademöglichkeiten für Elektrofahrzeuge bereitstellen.

Nach einem weiteren Aspekt der Erfindung wird eine Ladeinfrastruktureinrichtung vorgeschlagen, umfassend wenigstens ein Ladesystem für elektrische Verbraucher sowie eine zentralen Steuerungseinrichtung, welches Ladesystem welches wenigstens zwei Ladeanschlüsse und eine Leistungseinrichtung mit einer Transformatoreinheit umfasst, wobei die Ladeanschlüsse in wenigstens eine erste und wenigstens eine zweite elektrische Ladeleistungsgruppe eingeteilt sind, die von einer gemeinsamen Transformatoreinheit des Ladesystems versorgt sind und wobei eine Kommunikationseinrichtung zur Kommunikation mit der zentralen Steuerungseinrichtung vorgesehen ist, welche zur Beeinflussung von Ladevorgängen am Ladesystem vorgesehen ist.

In günstiger Ausgestaltung kann die wenigstens erste elektrische Ladeleistungsgruppe eine deutlich höhere elektrische Ladeleistung aufweisen als die wenigstens zweite elektrische Ladeleistungsgruppe. Insbesondere kann die elektrische Ladeleistung der wenigstens ersten Ladeleistungsgruppe um wenigstens einen Faktor zwei höher sein als die elektrische Ladeleistung der wenigstens zweiten Ladeleistungsgruppe.

Vorteilhaft kann eine Ladeinfrastruktureinrichtung bereitgestellt werden, bei der die Leistungseinrichtung auf die Anforderungen der Ladeleistungsgruppe mit der höheren oder höchsten Ladeleistung hin ausgelegt ist. Günstigerweise können die Ladeanschlüsse DC-Ladeanschlüsse sein. Für Verbraucher mit geringerer Ladeleistung können daher kostensparend dieselbe Leistungselektronik und dieselbe Transformatoreinheit vorgesehen sein wie für die Ladeleistungsgruppe mit der höchsten Ladeleistung. Mit besonderem Vorteil kann die Leistungseinrichtung von einem ortsüblichen lokalen Versorgungsnetz, etwa innerhalb einer Kommune, versorgt sein. Der Aufbau einer gesonderten elektrischen Versorgung für die Ladeinfrastruktureinrichtung kann vermieden werden, so dass eine Ladeinfrastruktur für viele Verbraucher, insbesondere Fahrzeuge, verfügbar ist.

Beispielsweise können elektrisch betriebene Busse Verbraucher der ersten Ladeleistungsgruppe mit hohem Ladeleistungsbedarf und elektrisch betriebene Personenwagen Verbraucher der zweiten Ladeleistungsgruppe mit niedrigerem Ladeleistungsbedarf sein.

Nach einer günstigen Ausgestaltung können die Ladeanschlüsse DC-Ladeanschlüsse sein, insbesondere DC-Schnellladeanschlüsse, was ein schnelles und komfortables Laden von Fahrzeugen ermöglicht.

Nach einer günstigen Ausgestaltung kann die Transformatoreinheit netzspannungsversorgt sein und an ein ortsübliches lokales elektrisches Versorgungsnetz angekoppelt sein. Ein separates Versorgungsnetz zur Versorgung der Ladeinfrastruktureinrichtung ist nicht notwendig. Vorhandene Ressourcen können genutzt werden.

Nach einer günstigen Ausgestaltung kann der wenigstens eine Ladeanschluss der ersten Ladegruppe eine Oberleitungsanordnung zur Stromabnahme durch einen Verbraucher, insbesondere einen Elektrobus, aufweisen und an einer Bushaltestelle angeordnet sein. Weisen Busse Oberleitungsstromabnehmer auf, kann eine bewährte Pantographentechnik eingesetzt werden.

Nach einer günstigen Ausgestaltung kann das Ladesystem der Ladeinfrastruktureinrichtung ein den wenigstens zwei Ladeleistungsgruppen gemeinsames Energiemanagement mit einer Steuer- und/oder Regelungseinheit der Leistungseinrichtung aufweisen. Das Laden der Verbraucher kann günstig zwischen den einzelnen Ladeleistungsgruppen wie auch mit dem ortsüblichen lokalen elektrischen Versorgungsnetz abgestimmt werden. So kann ein Verbraucher der ersten Ladeleistungsgruppe gegenüber anderen Verbrauchern, die an der Ladeinfrastruktureinrichtung angeschlossen sind, priorisiert werden. Ebenso können unerwünschte Spitzenlasten im Versorgungsnetz durch eine geeignete Beeinflussung des Ladevorgangs abgeschwächt werden.

Nach einer günstigen Ausgestaltung können eine oder mehrere Erkennungseinheiten vorgesehen sein, die eine Anwesenheit von einem Verbraucher und/oder einen Ladebedarf durch einen Verbraucher zumindest der ersten Ladeleistungsgruppe erkennen können. Hierdurch kann z.B. ein Signal an die Steuer- und/oder Regelungseinheit gegeben werden, um das Laden an dem Ladeanschluss in der ersten Ladeleistungsgruppe freizugeben.

Nach einem weiteren Aspekt der Erfindung wird ein Verfahren zum Betreiben einer solchen Ladeinfrastruktureinrichtung mit einem Ladesystem vorgeschlagen, wobei ein Laden von Verbrauchern einer zweiten elektrischen Ladeleistungsgruppe abhängig von einem Laden von Verbrauchern einer ersten elektrischen Ladeleistungsgruppe erfolgt. Vorteilhaft kann ein vorhandenes und beispielsweise für Kommunen vorgesehenes Versorgungsnetz auch für die elektrische Versorgung von Fahrzeugen wie Busse und Personenwagen eingesetzt werden.

Nach einer günstigen Ausgestaltung kann ein Laden von Verbrauchern in der Ladeinfrastruktureinrichtung abhängig von einer Stromüberversorgung oder einer Stromunterversorgung eines das Ladesystem speisenden elektrischen Versorgungsnetzes erfolgen. Günstigerweise kann eine Energiespeichereinheit als Puffer eingesetzt werden, so dass Lastspitzen im lokalen Versorgungsnetz vermieden werden können.

Nach einer günstigen Ausgestaltung kann bei einer Stromüberversorgung bedarfsweise eine Energiespeichereinheit des Ladesystems aufgeladen werden und/oder bei Stromunterversorgung oder erhöhtem Ladebedarf zumindest ein Teil des Ladevorgangs der Verbraucher über die Energiespeichereinheit durchgeführt werden. Lastspitzen werden vermieden und die Netzstabilität günstig beeinflusst.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: schematisch eine Ladeinfrastruktureinrichtung mit einem Ladesystem und angeschlossenen Verbrauchern einer ersten und zweiten Ladeleistungsgruppe nach einem Ausführungsbeispiel der Erfindung;
- Fig. 2: ein Blockdiagramm einer Leistungseinrichtung eines Ladesystems nach einem Ausführungsbeispiel der Erfindung; und
- Fig. 3: ein Blockdiagramm einer Leistungseinrichtung eines Ladesystems nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

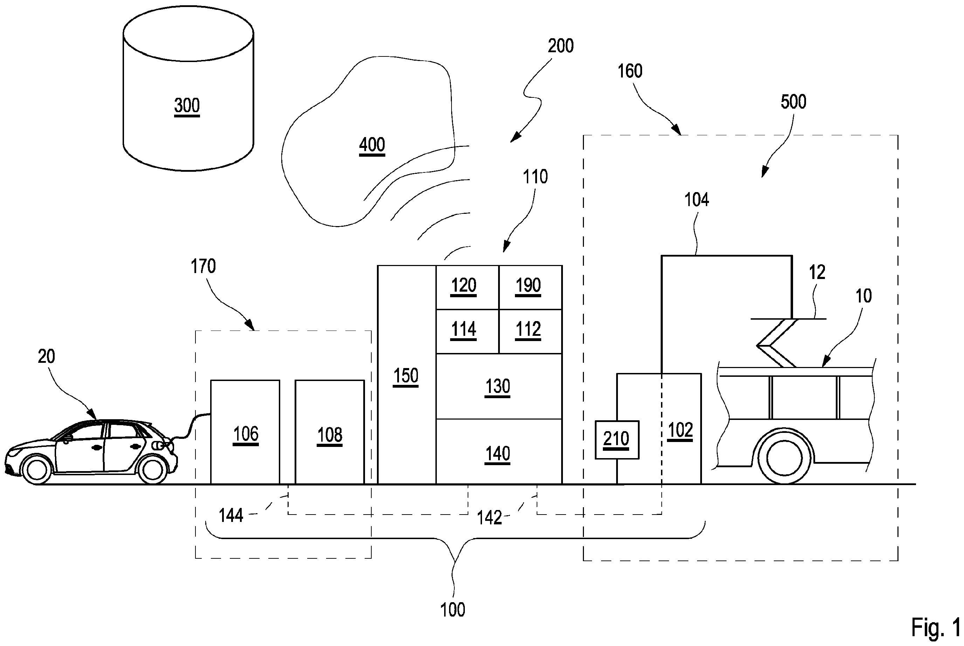

Figur 1 zeigt zur Erläuterung der Erfindung schematisch eine Ladeinfrastruktureinrichtung 200 mit einem Ladesystem 100 und mit einem angeschlossenen Verbraucher 10, hier einem Bus, einer ersten Ladeleistungsgruppe 160 und einem angeschlossenen Verbraucher 20, hier einem Personenwagen, einer zweiten Ladeleistungsgruppe 170 nach einem Ausführungsbeispiel der Erfindung. Die Ladeinfrastruktureinrichtung 200 ist an einer Bushaltestelle 500 angeordnet, an welcher der Verbraucher 10 geladen werden kann, während Fahrgäste zusteigen oder aussteigen. Die Komponenten der Ladeinfrastruktureinrichtung 200 sind vorzugsweise in der engeren Nachbarschaft der Haltestelle 500 angeordnet.

Das Ladesystem 100 umfasst eine Leistungseinrichtung 110 mit einer Transformatoreinheit 130 und Ladeanschlüssen 102, 106, 108 für Verbraucher, wobei die Ladeanschlüsse 102, 106, 108 in eine erste Ladeleistungsgruppe 160 mit dem Ladeanschluss 102 und eine zweite Ladeleistungsgruppe 170 mit zwei Ladeanschlüssen 106, 108 eingeteilt sind. Alle Ladeanschlüsse 102, 106, 108 sind an einer gemeinsamen Transformatoreinheit 130 des Ladesystems 100 angeschlossen und werden von dieser versorgt. Die Leistungseinrichtung 110 weist für die erste Ladeleistungsgruppe 160 einen entsprechenden Lader 112 auf und für die zweite Ladeleistungsgruppe 170 einen Lader 114 auf.

Den beiden Ladeleistungsgruppen 160, 170 ist ein gemeinsames Energiemanagement mit einer Steuer- und/oder Regelungseinheit 140 der Leistungseinrichtung 110 zugeordnet. Daher kann die Steuer- und/oder Regelungseinheit 140 das Laden von Verbrauchern 10 der ersten Ladeleistungsgruppe 160 gegenüber Verbrauchern 20 anderer Ladeleistungsgruppen 170 priorisieren, deren Ladevorgang kurzzeitig unterbrochen werden kann. Demnach kann das Laden von Verbrauchern 20 abhängig von Verbrauchern 10 erfolgen.
Die erste elektrische Ladeleistungsgruppe 160 weist eine deutlich höhere elektrische Ladeleistung auf als die zweite elektrische Ladeleistungsgruppe 170, wobei die elektrische Ladeleistung der ersten Ladeleistungsgruppe 160 um wenigstens einen Faktor zwei höher ist als die elektrische Ladeleistung der wenigstens zweiten Ladeleistungsgruppe 170.

Der Verbraucher 10, der an den Ladeanschluss 102 der ersten Ladeleistungsgruppe 160 angeschlossen ist, ist vorzugsweise ein Bus, insbesondere ein Linienbus und weist eine Ladeleistung von z.B. 300 kW auf, wenn eine DC-Schnellladung durchgeführt wird. Vorzugsweise sind die Ladeanschlüsse 102, 106, 108 als Schnellladeanschlüsse konfiguriert.

Die Transformatoreinheit 130 der Leistungseinrichtung 110 ist an dem Bedarf der ersten Ladeleistungsgruppe 160 ausgerichtet. Statt einem Verbraucher 10 mit 300 kW können in der zweiten Ladeleistungsgruppe 170 zwei Ladeanschlüsse 106, 108 vorgesehen sein, um zwei Verbraucher beispielsweise mit 150 kW Ladeleistung zu versorgen. Die Leistungseinrichtung 110 ist über eine Verbindungsleitung 142 mit dem Ladeanschluss 102 der ersten Ladeleistungsgruppe 160 und über eine Verbindungsleitung 144 mit den Ladeanschlüssen 106, 108 der zweiten Ladeleistungsgruppe 170 verbunden und versorgt diese darüber mit elektrischer Leistung. Dieselbe Transformatoreinheit 130 sowie die zugehörige Leistungselektronik kann die Verbraucher 10, 20 der Ladeleistungsgruppen 160, 170 versorgen, obwohl diese einen stark unterschiedlichen Ladeleistungsbedarf aufweisen.

Für jeden Ladeanschluss 106, 108 der zweiten Ladeleistungsgruppe 170 kann eine Ladesäule vorgesehen sein. Der Ladeanschluss 102 der ersten Ladeleistungsgruppe 160 ist als Oberleitungsanordnung 104 zur Stromabnahme durch einen Stromabnehmer 12 des Verbrauchers 10 ausgebildet. In der dargestellten Ausführung ist eine Erkennungseinheit 210 vorgesehen In der dargestellten Ausführung ist eine optionale Energiespeichereinheit 150 vorgesehen, welche zum Laden und/oder Zwischenspeichern von Ladeenergie für die ersten und/oder zweiten Ladeleistungsgruppen 160, 170 dient.

Günstigerweise kann die Energiespeichereinheit 150 als Puffer eingesetzt werden, so dass Lastspitzen im lokalen Versorgungsnetz vermieden werden können. Bei einer Stromüberversorgung kann die Energiespeichereinheit 150 des Ladesystems 100 bedarfsweise aufgeladen werden und/oder bei Stromunterversorgung oder erhöhtem Ladebedarf zumindest ein Teil des Ladevorgangs der Verbraucher 10, 20 über die Energiespeichereinheit 150 durchgeführt werden. Lastspitzen werden vermieden und die Netzstabilität günstig beeinflusst.

Die Leistungseinrichtung 110 ist über eine Kopplungseinrichtung 190 zur Stromversorgung mit einem lokalen Versorgungsnetz verbunden (nicht dargestellt). Das Versorgungsnetz versorgt in üblicher Weise Verbraucher in der Umgebung der Haltestelle 500, beispielsweise Gebäude und dergleichen, mit elektrischer Leistung.

Ferner ist in der Ladeinfrastruktureinrichtung 200 zur Kommunikation mit einer zentralen Steuerungseinrichtung 300, beispielsweise bei einem Energieversorger, über einen Übertragungsweg 400 eine Kommunikationseinrichtung 120 vorgesehen, über die eine Abrechnung der Ladeenergie für die ersten und zweiten Ladeleistungsgruppen 160, 170 erfolgen kann. Ferner kann die zentrale Steuerungseinrichtung 300 darüber Einfluss auf die Ladevorgänge in der Ladeinfrastruktureinrichtung 200 nehmen, um unerwünschte Lastspitzen im Versorgungsnetz zu reduzieren oder zu vermeiden, wenn insbesondere die erste Ladeleistungsgruppe 160 Ladeleistung für einen Bus abgibt. Da ein Linienbus die Haltestelle 500 regelmäßig und zu bekannten Zeiten anfährt, lässt sich der Ladeleistungsbedarf der Ladeinfrastruktureinrichtung 200 gut abschätzen und eine geeignete Ladestrategie über das Energiemanagement vorgeben.

So kann vorausschauend der optionale Energiespeicher 150 geladen oder entladen werden, um einen kommenden absehbaren Stromüberschuss aufzunehmen oder eine kommenden absehbare Unterversorgung des Versorgungsnetzes abzupuffern, indem dann die Verbraucher 10 vorzugsweise aus dem Energiespeicher 150 geladen werden.

Bei einem günstigen Energiemanagement kann berücksichtigt werden, dass typischerweise Busse gleicher Leistungsklasse (Verbraucher 10) einer Busflotte einer Stadt immer mit derselben Ladeleistung geladen werden, während es auf der Seite der Verbraucher 20, etwa PKW oder dergleichen, typischerweise ganz unterschiedliche Ladeleistungen gibt, die erst nach erfolgreicher Interaktion des Ladesystems 100 mit dem Fahrzeug (Verbraucher 20) ermittelt wird. Die Ladeleistung der Busse wird üblicherweise initial z.B. bei Beschaffung eingestellt und bleibt dann konstant. Bei Verbrauchern 20, wie PKWs, Elektrorädern und dergleichen, ist jedoch von individuellen Ladeleistungen auszugehen, bzw. sind heute schon etabliert.

Erkennt die Erkennungseinheit 210 das Herannahen eines Busses, können etwaige Sicherheitseinrichtungen freigeschaltet werden, so dass der Bus mit seinem Stromabnehmer 12 den Ladeanschluss 102 elektrisch kontaktieren und Ladeleistung abziehen kann, während der Bus an der Haltestelle 500 verweilt.

Sind weitere Verbraucher 20 in der zweiten elektrischen Ladeleistungsgruppe 170 an deren Ladeanschlüssen 106, 108 angeschlossen, kann das Energiemanagement die Ausgabe von Ladeleistung an die zweite elektrische Ladeleistungsgruppe 170 unterbinden, wozu die Steuer- und/oder Regeleinrichtung ein entsprechendes Signal an den Lader 114 der zweiten Ladeleistungsgruppe 170 abgibt.

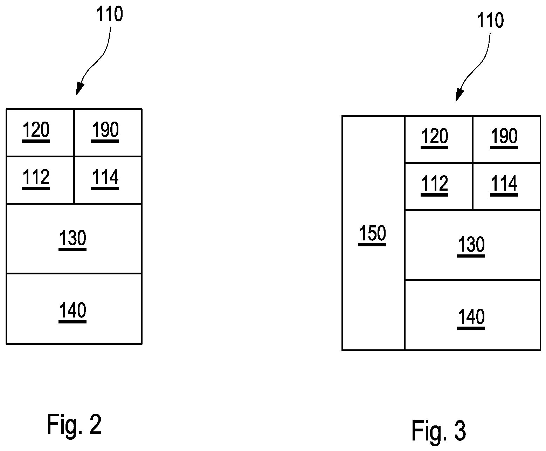

Die Figuren 2 und 3 zeigen Ausgestaltungen der Leistungseinrichtung 110.

Die Ausgestaltung in Figur 2 umfasst die Leistungseinrichtung 110 eine Transformatoreinrichtung 130 sowie einen Lader 112 für die erste Ladeleistungsgruppe 160 und einen Lader 114 für die zweite Ladeleistungsgruppe 170. Sind weitere Ladeleistungsgruppen vorhanden, können weitere Lader vorgesehen sein. Eine Steuer- und/oder Regelungseinheit 140 steuert die Lader 112, 114 entsprechend an, um Ladeleistung freizugeben oder zu sperren. Eine Kommunikationseinheit 120 dient der Kommunikation mit einer zentralen Steuerungseinrichtung, beispielsweise bei einem Energieversorger, um die Leistungseinrichtung 110 in ein Versorgungsnetz zu integrieren und die Ladeleistungsabgabe an die Rahmenbedingungen des Versorgungsnetzes anzupassen. Eine Kopplungseinheit 190 ist zum Anschluss der Leistungseinrichtung 110 an das Versorgungsnetz vorgesehen.

Die Ausgestaltung in Figur 3 umfasst wie die Leistungseinrichtung 110 in Figur 2 eine Transformatoreinrichtung 130 sowie einen Lader 112 für die erste Ladeleistungsgruppe 160 und einen Lader 114 für die zweite Ladeleistungsgruppe 170. Sind weitere Ladeleistungsgruppen vorhanden, können weitere Lader vorgesehen sein. Eine Steuer- und/oder Regelungseinheit 140 steuert die Lader 112, 114 entsprechend an, um Ladeleistung freizugeben oder zu sperren. Eine Kommunikationseinheit 120 dient der Kommunikation mit einer zentralen Steuerungseinrichtung, beispielsweise bei einem Energieversorger, um die Leistungseinrichtung 110 in ein Versorgungsnetz zu integrieren und die Ladeleistungsabgabe an die Rahmenbedingungen des Versorgungsnetzes anzupassen. Eine Kopplungseinheit 190 ist zum Anschluss der Leistungseinrichtung 110 an das Versorgungsnetz vorgesehen. Zusätzlich ist eine Energiespeichereinheit 150 vorgesehen, etwa eine Batterie, ein Schwungradspeicher, eine Kondensatoreinheit oder eine Kombinationen verschiedener Energiespeichereinheitentypen. Dies erlaubt es, zusätzliche Ladeleistung zur Verfügung zu stellen und Lastspitzen im Versorgungsnetz zu reduzieren oder zu vermeiden.

## Patentansprüche

1. Ladesystem (100) für elektrische Verbraucher (10, 20), umfassend wenigstens zwei Ladeanschlüsse (102, 106, 108) und eine Leistungseinrichtung (110) mit einer Transformatoreinheit (130), **dadurch gekennzeichnet, dass** die Ladeanschlüsse (102, 106, 108) in wenigstens eine erste und wenigstens eine zweite elektrische Ladeleistungsgruppe (160, 170) eingeteilt sind, die von einer gemeinsamen Transformatoreinheit (130) des Ladesystems (100) versorgt sind wobei die elektrische Ladeleistung der wenigstens ersten Ladeleistungsgruppe (160) um wenigstens einen Faktor zwei höher ist als die elektrische Ladeleistung der wenigstens zweiten Ladeleistungsgruppe (170).

2. Ladesystem nach Anspruch 1, **dadurch gekennzeichnet, dass** die Zahl der Ladeanschlüsse (106, 108) der wenigstens zweiten Ladeleistungsgruppe (170) mit geringerer elektrischer Ladeleistung um wenigstens ein geradzahliges Vielfaches größer ist als die Zahl der Ladeanschlüsse (102) der wenigstens ersten Ladeleistungsgruppe (160), wobei das geradzahlige Vielfache mindestens gleich dem auf eine ganze Zahl gerundeten Faktor ist.

3. Ladesystem (100) für elektrische Verbraucher (10, 20), umfassend wenigstens zwei Ladeanschlüsse (102, 106, 108) und eine Leistungseinrichtung (110) mit einer Transformatoreinheit (130), wobei die Ladeanschlüsse (102, 106, 108) in wenigstens eine erste und wenigstens eine zweite elektrische Ladeleistungsgruppe (160, 170) eingeteilt sind, die von einer gemeinsamen Transformatoreinheit (130) des Ladesystems (100) versorgt sind, insbesondere nach Anspruch 1,
**dadurch gekennzeichnet, dass** die elektrische Ladeleistung der wenigstens ersten Ladeleistungsgruppe (160) um wenigstens einen Faktor zwei höher ist als die elektrische Ladeleistung der wenigstens zweiten Ladeleistungsgruppe (170), wobei die Zahl der Ladeanschlüsse (106, 108) der wenigstens zweiten Ladeleistungsgruppe (170) mit geringerer elektrischer Ladeleistung um wenigstens ein geradzahliges Vielfaches größer ist als die Zahl der Ladeanschlüsse (102) der wenigstens ersten Ladeleistungsgruppe (160), wobei das geradzahlige Vielfache mindestens gleich dem auf eine ganze Zahl gerundeten Faktor ist.

4. Ladesystem nach wenigstens einem der vorhergehenden Ansprüche, **dadurch gekennzeichnet, dass** den wenigstens zwei Ladeleistungsgruppen (160, 170) ein gemeinsames Energiemanagement mit einer Steuer- und/oder Regelungseinheit (140) der Leistungseinrichtung (110) zugeordnet ist, und/oder dass den wenigstens zwei Ladeleistungsgruppen (160, 170) ein gemeinsames Energiemanagement mit einer Steuer- und/oder Regelungseinheit (140) der Leistungseinrichtung (110) zugeordnet ist und die Steuer- und/oder Regelungseinheit (140) zu einer Priorisierung des Ladens von Verbrauchern (10) der ersten Ladeleistungsgruppe (160) gegenüber Verbrauchern (20) anderer Ladeleistungsgruppen (170) vorgesehen ist.

5. Ladesystem nach einem der vorhergehenden Ansprüche, **dadurch gekennzeichnet, dass** wenigstens die Ladeanschlüsse (106, 108) der wenigstens zweiten und etwaigen weiteren Ladeleistungsgruppen (170) DC-Ladeanschlüsse, insbesondere DC-Schnellladeanschlüsse, sind.

6. Ladesystem nach einem der vorhergehenden Ansprüche, **dadurch gekennzeichnet, dass** wenigstens eine Energiespeichereinheit (150) vorgesehen ist, welche zum Laden und/oder Zwischenspeichern von Ladeenergie für die wenigstens ersten und/oder wenigstens zweiten Ladeleistungsgruppen (160, 170) vorgesehen ist.

7. Ladesystem nach einem der vorhergehenden Ansprüche, **dadurch gekennzeichnet, dass** die wenigstens erste Ladeleistungsgruppe (160) zur Versorgung von Verbrauchern (10) mit einer Ladeleistung von mindestens 300 kW, insbesondere mindestens 400 kW, vorgesehen ist, vorzugsweise zur Versorgung von Elektrobussen.

8. Ladesystem nach einem der vorhergehenden Ansprüche, **dadurch gekennzeichnet, dass** der Ladeanschluss (102) für die wenigstens erste Ladeleistungsgruppe (160) eine Oberleitungsanordnung (104) zur Stromabnahme durch einen Stromabnehmer (12) eines Verbrauchers (10) aufweist.

9. Ladesystem nach einem der vorhergehenden Ansprüche, **dadurch gekennzeichnet, dass** eine Kommunikationseinrichtung (120) vorgesehen ist, mit der eine Kommunikation mit einer zentralen Steuerungseinrichtung (300) durchführbar ist.

10. Ladesystem nach einem der vorhergehenden Ansprüche, **dadurch gekennzeichnet, dass** eine Kopplungseinrichtung (190) zur Ankopplung an ein ortsübliches lokales elektrisches Versorgungsnetz vorgesehen ist.

11. Ladeinfrastruktureinrichtung (200), umfassend wenigstens ein Ladesystem (100) für elektrische Verbraucher (10, 20) nach einem der vorhergehenden Ansprüche, sowie eine zentralen Steuerungseinrichtung (300), welches Ladesystem (100) wenigstens zwei Ladeanschlüsse (102, 106, 108) und eine Leistungseinrichtung (110) mit einer Transformatoreinheit (130) umfasst, wobei die Ladeanschlüsse (102, 106, 108) in wenigstens eine erste und wenigstens eine zweite elektrische Ladeleistungsgruppe (160, 170) eingeteilt sind, die von einer gemeinsamen Transformatoreinheit (130) des Ladesystems (100) versorgt sind und
wobei eine Kommunikationseinrichtung (120) zur Kommunikation mit der zentralen Steuerungseinrichtung (300) vorgesehen ist, welche zur Beeinflussung von Ladevorgängen am Ladesystem (100) vorgesehen ist.

12. Ladeinfrastruktureinrichtung nach Anspruch 11, **dadurch gekennzeichnet, dass** die Transformatoreinheit (140) netzspannungsversorgt ist und an ein ortsübliches lokales elektrisches Versorgungsnetz angekoppelt ist.

13. Ladeinfrastruktureinrichtung nach Anspruch 11 oder 12, **dadurch gekennzeichnet, dass** der wenigstens eine Ladeanschluss (102) der ersten Ladeleistungsgruppe (160) eine Oberleitungsanordnung (104) zur Stromabnahme durch einen Verbraucher (10) aufweist und an einer Bushaltestelle (500) angeordnet ist.

14. Ladeinfrastruktureinrichtung nach einem der Ansprüche 11 bis 13, **dadurch gekennzeichnet, dass** das Ladesystem (100) ein den wenigstens zwei Ladeleistungsgruppen (160, 170) gemeinsames Energiemanagement mit einer Steuer- und/oder Regelungseinheit (140) der Leistungseinrichtung (110) aufweist.

15. Ladeinfrastruktureinrichtung nach einem der Ansprüche 11 bis 14, **dadurch gekennzeichnet, dass** eine Erkennungseinheit (210) vorgesehen sind, die eine Anwesenheit eines Verbrauchers (10) und/oder einen Ladebedarf eines Verbrauchers (10) zumindest der ersten Ladeleistungsgruppe (160) erkennt.

16. Verfahren zum Betreiben einer Ladeinfrastruktureinrichtung (200) mit einem Ladesystem (100) nach einem der Ansprüche 11 bis 15, **dadurch gekennzeichnet, dass** ein Laden von Verbrauchern (20) einer zweiten elektrischen Ladeleistungsgruppe (170) abhängig von einem Laden von Verbrauchern (10, 20) einer ersten elektrischen Ladeleistungsgruppe (160) erfolgt.

17. Verfahren nach Anspruch 16, **dadurch gekennzeichnet, dass** ein Laden von Verbrauchern (10, 20) in der Ladeinfrastruktureinrichtung (200) abhängig von einer Stromüberversorgung oder einer Stromunterversorgung eines das Ladesystem (100) speisenden elektrischen Versorgungsnetzes erfolgt.

18. Verfahren nach einem der Ansprüche 16 bis 17, **dadurch gekennzeichnet, dass** bei einem Stromüberversorgung bedarfsweise eine Energiespeichereinheit (150) des Ladesystems (100) aufgeladen wird und/oder bei Stromunterversorgung oder erhöhtem Ladebedarf zumindest ein Teil des Ladevorgangs der Verbraucher (10, 20) über die Energiespeichereinheit (150) durchgeführt wird.
